# EUROPEAN PATENT SPECIFICATION

(11) **EP 3 215 098 B1**
(45) Date of publication and mention of the grant of the patent: **02.10.2019**
(21) Application number: 15807973.1
(22) Date of filing: 18.11.2015
(51) Int. Cl.: A61G 10/00, A61G 10/02, B25J 21/02

(54) **DEVICE FOR CONTAINING DEADLY GERMS OF A PATIENT DURING TREATMENT**
VORRICHTUNG ZUR EINDÄMMUNG VON TÖDLICHEN KEIMEN EINES PATIENTEN WÄHREND DER BEHANDLUNG
DISPOSITIF DE CONFINEMENT DES GERMES MORTELS D'UN PATIENT PENDANT UN TRAITEMENT

(30) Priority: 18.11.2014 US 201414543912
(43) Date of publication of application: 13.09.2017
(73) Proprietor: Poenisch, Adele, Berkeley, California 94705 (US); Matsumura, Kenneth, Berkeley, California 94705 (US)
(72) Inventor: Poenisch, Adele, Berkeley, California 94705 (US); Matsumura, Kenneth, Berkeley, California 94705 (US)
(74) Representative: Bennett, Adrian Robert J.
(86) International application number: PCT/GB2015/053513
(87) International publication number: WO 2016/079514

(56) References cited:
- EP-A1- 1 495 743
- EP-A2- 0 827 728
- WO-A1-2005/009316
- GB-A- 2 314 859
- US-A- 3 348 890
- US-A- 3 492 987
- US-A1- 2006 020 159
- US-A1- 2007 186 777

## Description

### CROSS-REFERENCE TO RELATED APPLICATIONS

This application is a continuation-in-part application to an application filed under the same title on October 28, 2014 by Express Mail at 1:35 PM Eastern Time, Application number 14121861102814, now abandoned.

### BACKGROUND OF THE INVENTION

This invention is in the field of method for germ containment and more specifically a method for preventing the spread of deadly germs from a sick patient while being treated.

Recent decades have seen deadly viruses such as ebola and SARS threaten the decimation of our society. Given the fact that there exists hospital beds for less than 1% of our population to contain and treat such deadly viruses, with doubts that enough nurses can be trained to not catch the virus from a patient should a viral epidemic occur, it behooves our society to have zero tolerance for allowing patients to spread the virus into the society through caregivers.

Current method for containing the virus involves specialized rooms where air coming out is filtered, caregivers don gowns, headgear, masks, and shoe covers which must be carefully removed when coming out of the room, typically in an ante-room, being careful not to touch infected gear with bare hands. When such a system is applied suddenly in untrained facility involving more than 70 care personnel of varying background in education, failures do occur. Also, such a set up requires a large amount of space that must be set up in advance. Such a space may not find other uses when not in use which can be costly to create and costly to let sit idle. Society is in need of a more sure-proof, economical method of containment that can also lend itself to massive scaling up of the number of patients such as can occur in bio-terrorism. Such a method ideally could take an ordinary room, not even in the hospital, to treat sick patients.

GB2314859 relates to accommodation units providing an isolated environment.

United States recently experienced several ebola outbreaks which overwhelmed available medical care systems. In Dallas (Texas, United States) at the Presbyterian Hospital a spokesman said that disposal of waste from caregiving seriously challenged them requiring an entire room to pile debris in stacked to the ceiling. At another treatment site run by the National Health Service, a spokesman said that waste disposal presented a limit in the number of patients that can be care for. New strategies are clearly needed.

### BRIEF SUMMARY OF THE INVENTION

Generally, our method of this invention comprises
placing a patient suspected or proven to be infected with certain deadly germs and in need of quarantine and/or treatment into a space delimiting containment box large enough to hold said patient and which provides sufficient separation between said patient and caregivers to prevent transfer of germs from said patient to caregivers,
providing care to said patient using sets of glove means mounted on sets of openings in the walls of said containment box,
providing necessary fluid, nutrition, and air to said patient without allowing said germs to escape out of said containing device into environment outside said containment box,
providing for removal of waste products of said patient and caregiving without allowing said germs to escape undestroyed into environment outside said containment box.

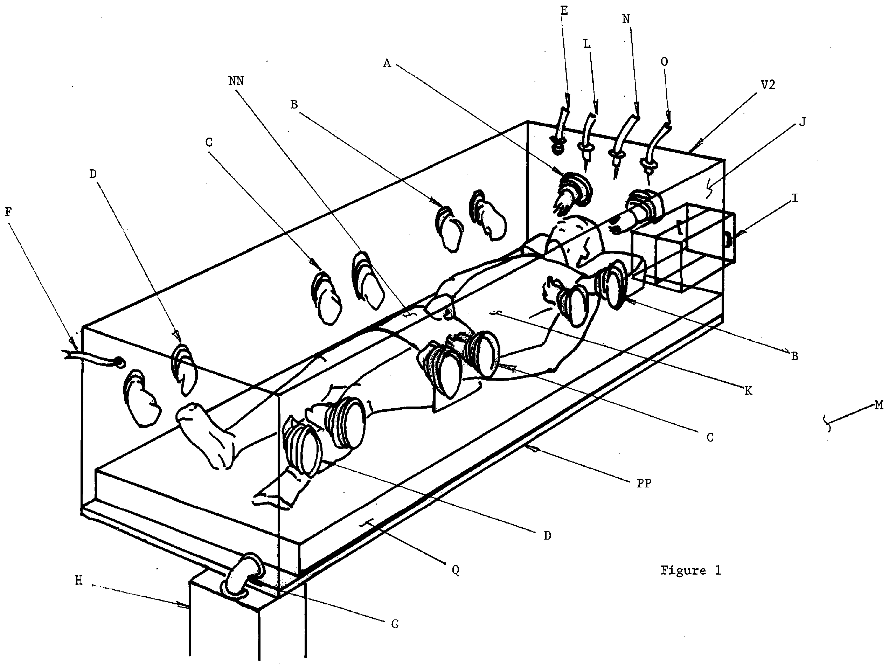

In one preferred embodiment of this invention, a device of this invention comprises:
hermetically sealed human sized, largely rectangular, mostly transparent, preferably hard-shelled, multi-gloved containment box (Fig. 1) that can hold a patient and which has means to allow the patient treatments by caregivers outside said box without caregivers having any direct contact with said patient.

Said means would include dual-gloved portals in the box at the end wall close to the head of the patient that would allow the patient to be intubated or to receive nasal suction or to allow insertion of nasogastric tubes (Figure 1, A).

A second set of dual-gloved portal means on the side walls near the patient's right and left elbows would allow venipuncture of patient for tests and would allow venous catheterization so that the patient can be given intravenous fluids, medications and nourishment (Figure 1, B).

Another dual-gloved portal means on the right and left side walls at the hip level would allow caregivers to tap the femoral artery for blood gases, do a lumbar puncture, or catheterize the bladder of the patient (Figure 1, C).

Further additional dual-gloved portal means at the level of the patient's ankle (Figure 1, D) would allow venipuncture as well allow starting intravenous catheters there or for purpose of restraining ankles.

All said dual glove portal means would allow caregivers to touch the patient through gloved hands to comfort the patient.

Other means are provided to supply other necessary services a patient would need including air, fluids, nourishment, hygiene, general comfort.

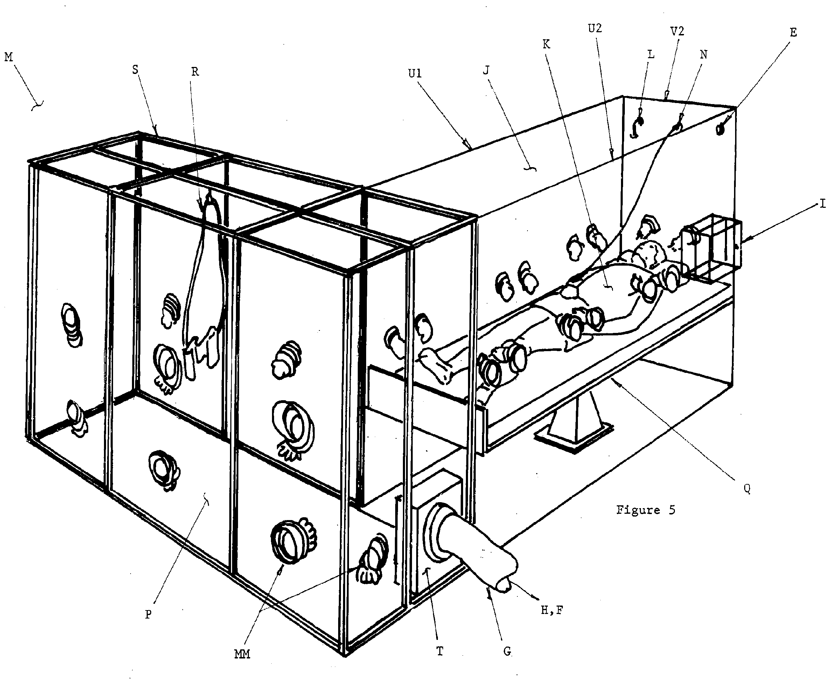

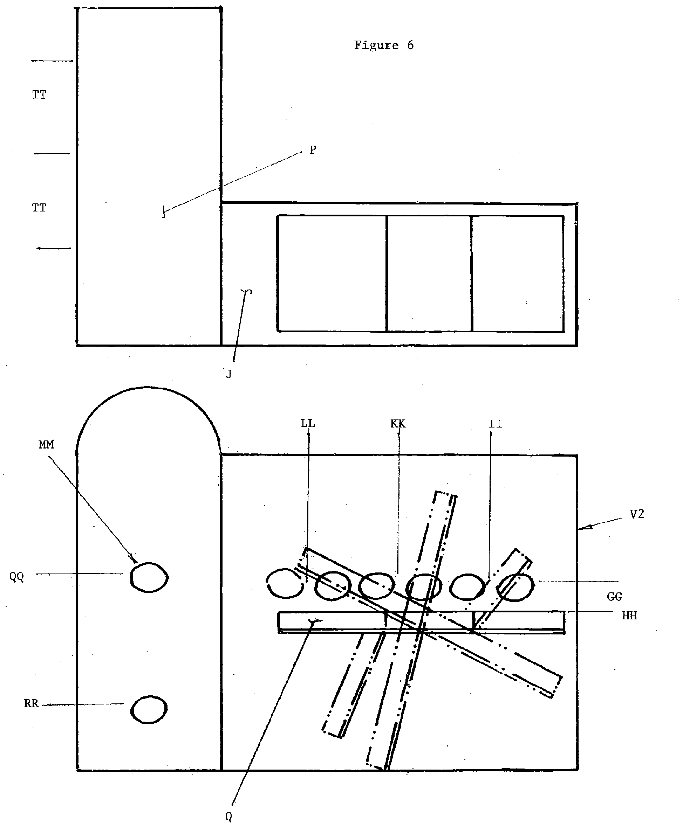

In an embellished embodiment, said device described above opens at foot to a hermetically sealed cavernous lounge space (Figure 5 & 6), said device described above having a bed that converts into a chair that assists said patient to stand enabling said patient to enter said lounge space.

According to one aspect of the invention there is provided a device according to claim 2 in which it is stated that all said means are ensured to not allow germs inside said box to escape outside said box. This could be achieved by checking, configuring, adapting and/or arranging the all said means such that no or substantially no germs are allowed to escape from the inside of the box to the outside of the box when the box is sealed. In this way, any or all of the means may be configured or otherwise arranged such that substantially all germs are contained within the interior of the box.

The box has means for placing said human sealed inside and removing said human from said box. This may comprise separate means for placing and removing the human from the box. Alternatively separate placing means and removal means may be provided. The means may comprise means for sealing the human inside the box once the human is placed in the box.

### DRAWINGS OF THE INVENTION

Figure 1 generally depicts basic aspects of one embodiment of the invention.
Figure 2 depicts dual glove portal means.
Figure 3 depicts an embodiment providing for a spacious box for infected patient wanting to ambulate.
Figure 4 depicts how the embodiment in Figure 3 can have its volume halved to make invention more similar to embodiment depicted in Figure 1 for patient to receive care completely in bed.
Figure 5 presents a plan and elevation view of another embodiment of the invention wherein said box for treatment of a patient is hermetically joined to a sealed space delimiting room to allow a patient being treated in said box to intermittently stretch and lounge in said room. patient to stand.
Figure 6 depicts the embodiment drawn in Figure 5 in a plan and elevation. The drawing also shows how the patient bed can be electrically-powered to become a chair or assist said patient to stand.
Figure 7 depicts a body harness that a recovering infected patient can wear to prevent a fall when ambulating in lounge room using an overhead rail linked to said harness.

### DETAILED DESCRIPTION OF THE INVENTION

### Sealed Box

Said box could be rectangular to facilitate storage of a large number of them when not in use, but could be of other dimensions to allow patients greater mobility and take different resting positions by themselves (recumbent, sitting, standing). Said box could have rounded corners. Therefore, said box can be termed a sealed vessel instead of box. Said box in a preferred embodiment is made of hard plastic, such as plexiglass or polycarbonate for greater strength, durability, and visibility.

One embodiment of said box is depicted in Figure 1. Said embodiment is particularly useful for very ill patients who are mostly recumbent. However, this invention is intended for long-term care of a patient through a whole cycle of his disease, from a period when a patient is mostly asleep to when he is desirous of more activity. The following embodiments are preferred that would allow for more activity.

If the vertical dimension of said box depicted in Figure 1 is taller, and if the bed depicted in Figure 1 is like an electrical hospital bed, a patient can be positioned in a sitting position if the vertical dimension is, for example, 75 to 79 inches (∼191 to ∼201 cm). If the bed has a provision like certain lounge chairs (La-Z-Boy© recliners) to assist a patient to come to a standing posture, such features can facilitate a patient to leave said box to enter an adjacent lounge space which is hermetically joined to said box and is also hermetically sealed from its environment (Figure 5). Such features can also enable said patient to stand for reasons of physical therapy.

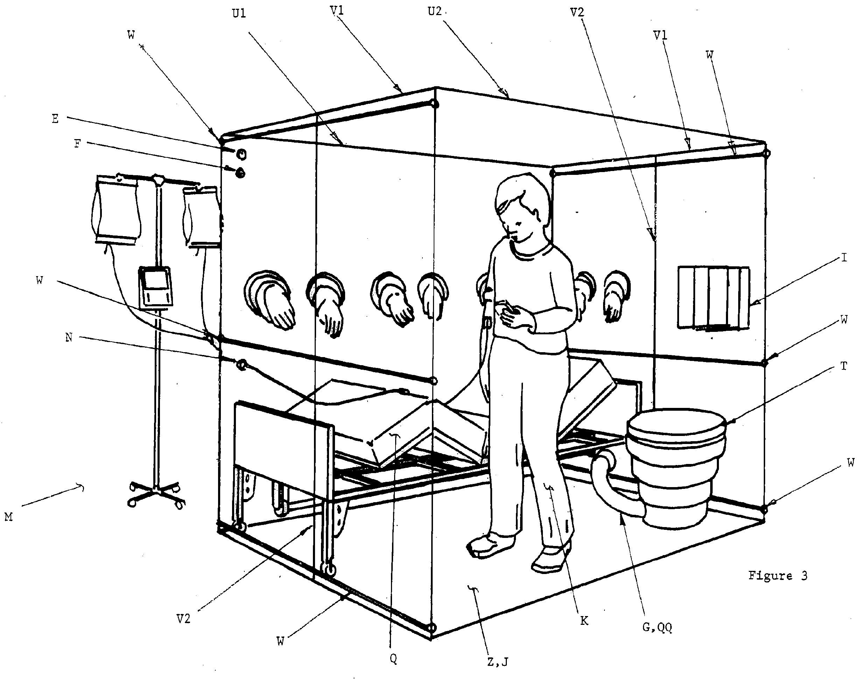

Another embodiment that is within the scope of this invention is depicted in Figure 3. Presented is a space delimiting containment box that is about 79 inches (∼201 cm) high, 90 inches (∼229 cm) long and 74 inches (∼188 cm) wide. Said box in this depiction is large enough for a patient to get off the bed by himself and walk around inside said box. He can also use a commode placed inside said box. Such a commode is preferably collapsible to allow it to fit under the bed once collapsed. In this embodiment, two long walls A & B are made of transparent polycarbonate thick enough to stand without bowing (other plastics like Plexiglass© can instead be used) or thinner thickness if a reinforcing metal frame is used to keep the plastic straight, and two short end walls C & D perpendicular to the long walls are made of clear film such as vinyl or polypropylene pleated, for example, in 12 inch (∼30 cm) widths along the short wall that is 79 inches (∼201 cm) tall (drawing does not depict pleating). To add strength to the two vinyl end walls, one can place a reinforcing polycarbonate wall, E & F, inside the portion of end vinyl wall by the bed, for example, a piece at each end of bed 78 ¾ inches (∼200 cm) tall, by 37 inches (∼94 cm) wide. Such polycarbonate end walls can be secured to side wall A. Because vinyl and other plastic films are not firm, structural framing can be provided for example by adding horizontal bars G secured onto the top of said polycarbonate long walls at ends, and by adding similar horizontal bars H onto the bottom of said polycarbonate long walls at ends and in the middle at around 3 feet (∼91 cm) high, I. Additional bracing can be provided as necessary. Bottom of said containment device depicted in Figure 3 is made of vinyl or other suitable plastic of thickness sufficient to resist tearing.

Prior to placing a patient into said box, said box needs to be furnished with such items as a bed. There can be a doorway placed in any appropriate wall of said box, such as on the vinyl wall C, in the case of box of Figure 3, which can be sufficiently hermetically sealed with a zipper and a zip lock©. A door way can instead be provided in a hard plastic wall, such as the wall B, in the case of box of Figure 3, using adequate gaskets to assure hermetical seal upon closure.

Same sets of glove port means are provided onto both walls A and B, as described for the box of Figure 1, at both sides of elbows of said patient, both sides at level of hips, and both sides of ankles. As described for box of Figure 1, a set of gloved portal means are provided also for the box of Figure 3 at the head (cephalad) wall F (portion of vinyl wall D).

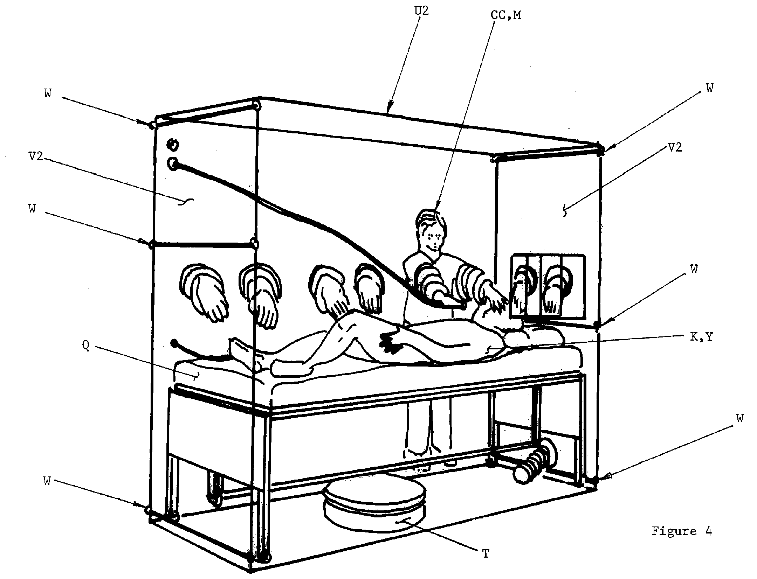

The feature of the embodiment depicted in Figure 3 is not only that the dimensions of said box allows for more mobility of the patient inside said box but said box is capable of halving its volume by moving said polycarbonate long wall B towards the depicted bed until said polycarbonate long wall is adjacent said bed as shown depicted in Figure 4. In the process of halving said box volume, said horizontal bars G, H & I, can be made to telescope down (shortened) and once the volume is halved, said polycarbonate long wall B can be secured at each end to said polycarbonate end walls E & F.

While the dimensions described for said box are those most appropriate for an adult patient, for children, one can reduce the length in particular of said box.

While in one embodiment, said box can be entirely made of hard plastic like plexiglass, in another embodiment, some of the portions of said box, especially upper and lower portions not likely touched by said patient can be framed in metal and covered in film plastic like 20 mil (∼0.5 mm) vinyl to reduce the cost of said box, to make its assembly easier, and to facilitate its transport. Since the purpose of this box is to enable caregiver to provide sophisticated medical support and treatment using said glove means, it is essential that areas of the walls of said box that can provide visual information to caregivers be clear and least likely to distort the visual image of said patient to said caregivers. Vinyl type film can distort what one sees through it and is unsatisfactory for areas that are regularly used to provide visual information to caregivers. Generally, hard plastics like polycarbonate and plexiglass can provide more realistic imaging of said patient to caregivers. Such materials are called, "non-image-distorting." What is also important to note is that this invention must be capable of long-term treatment and containment of an infected patient. Although possible, generally the intent of the invention is not a brief use of a few hours or a day. Construction therefore is described as "durable construction."

### Dual Gloved Portal Means

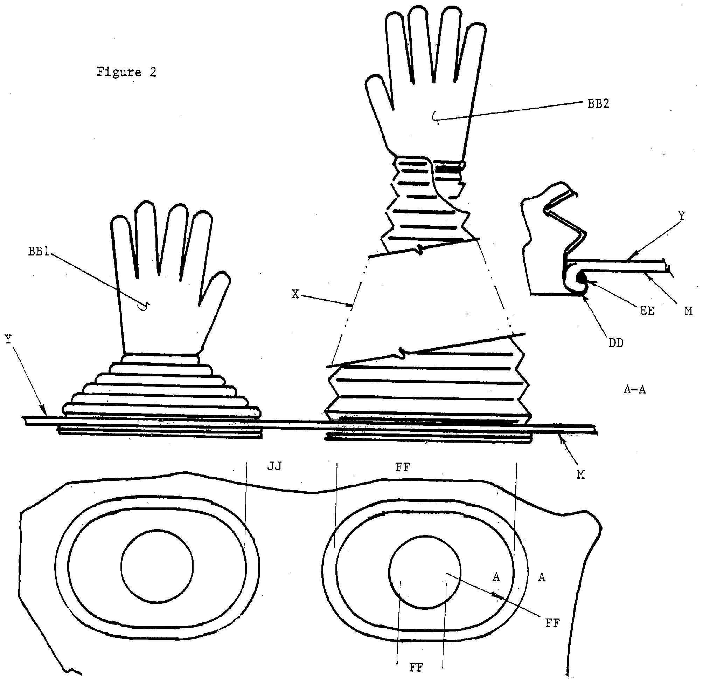

By the term, "dual gloved portal means" we mean something like depicted in Figure 2, which is similar to many versions commercially available from companies such as Germfree (11 Aviator Way, Ormond Beach, FL 32174 (USA), Cleatech (e.g. Model 2300), 221 W. Dyer Road, Santa Ana, CA 92707, Innovation Technologies, Inc., 1 Industrial Way, Amesburg, MA, and Cole Parmer 625 East Bunker Court, Vernon Hills, IL 60061. Technology of creating said gloved portal means has been well known for many decades and what is depicted in Figure 2 is not necessarily the optimum design. The purpose of Figure 2 is to illustrate the general principle of glove portal means, wherein there is a glove covering a portal opening on the side of a wall of a containment box and said glove seals the portal opening and is configured to allow a hand and arm to be inserted into such glove means so that gloved hand can reach deep into the interior of said containment box. Those skilled in the art will know what glove portal design would be most suitable for the purposes of this invention. Design for secured and hermetically sealing attachment of gloves to the wall can vary and all such designs are within the scope of this invention. It will be important that no one with long finger nails or jewelry be allowed to reach into said gloves. We also recommend that caregivers wear double disposable gloves before inserting hands into the gloves of said box. It will be important that the long gloves used in said gloved portal means be made of flexible plastic material that is impervious to viruses and bacteria and strong enough to not develop tears or holes through many cycles of hand insertions and extractions. It is anticipated that many of the gloves used in this invention will undergo 1000 or more such hand insertions and extractions just in the care of one patient. Gloves available commercially will need to be tested for long term durability and gloves made of more durable material may need to be fabricated for purposes of this invention. Such gloves are termed made of "long term material." As a standard operational procedure, the integrity of the gloves should be checked for by such means as by ensuring that the pressure of the air blown into said glove remains steady without declining. One can for example increase the negative pressure in said box such that when the open end of said glove is hermetically sealed by a "cap", said glove "blows up" and pressure inside such "blown up" glove can be monitored to detect leaks. Any leaking gloves can be removed and replaced during which time air pressure inside said box is made more negative with respect to the ambient pressure outside said box so that there is least likelihood of air inside said box leaking out to the environment outside said box. The damaged glove can be slipped off the exterior rim "lip" around each glove port and said damaged glove can be pulled inside for disposal, and a fresh glove can be introduced from the outside of said box into said box securing the glove's reinforced and elastic opening rim onto said glove port "lip," all the while air inside said box is being actively sucked out of said box at a location away from said glove portal hole using for example a finely adjustable peristaltic air pump. One can consider a periodic application of a sealing film gel evenly applied into the interior of said gloves that dry to provide a sealing film inside each glove.

The preferred locations of dual-gloved portal means are as presented in the foregoing summary of the invention, but more specifically the following are the locations in inches, measured from the cephalad end wall nearest where the head of said patient would be placed. The specified distance is for the center of each dual-gloved portal means. The height for each dual-gloved means is the same, 8 inches (∼20 cm) above the surface of the bed on which said patient lies, and where the height of the bed within said box can be adjusted when said box lies on the floor and said box is at least 50 inches (∼127 cm) tall, height of each dual-gloved means, at center, should be 44 inches (∼112 cm) from the floor, to enable a comfortable working height for caregivers. Ideal work conditions can change and these recommendations should not be considered absolute. Basically, the height recommended is at the elbow of a standing caregiver reaching into the box to treat the patient.

The distance from end wall(cephalad) to the center of the dual-gloved portal means at recumbent patient's elbow level should be 27 inches (∼69 cm) (note there are two holes making them "dual-gloved" and the center is the midpoint between the two holes - that is, where the two holes are separated by 4.5 inches (∼11 cm), said "midpoint" would at a point 2.25 inches (∼5.7 cm) from the proximal edge of the right hole and 2.25 inches (∼5.7 cm) from the proximal edge of the left hole); the distance from end wall (cephlad) to the center of the hip level dual-gloved portal means should be 38 inches (∼97 cm); the distance from end wall (cephalad) to the center of the ankle level dual-gloved portal means should be 63 inches (∼160 cm). Circumstances of caregiving and anatomical dimensions of said patient can dictate some changes in above dimensions. However, portals usable for outlined tasks including intubation, nasogastric tube insertion (for the dual portal means near the skull top of said patient), intravenous catheter insertion in antecubital fossa (for the dual portal means near the elbow of said patient), urinary catheter insertion, femoral artery puncture (for dual portal means near the hip of said patient), and pedal venipuncture or ankle restraint (for the dual portal means near the ankles), are the portals within the scope of this invention.

An important requirement for the gloved portal means is durability. With anticipation of even one thousand hand insertions and extractions, the glove portals themselves must be durable, meaning generally that the portals must be based either in hard plastic material (holes made in polycarbonate, for example) or rimmed with metal that is supported in metal frame.

### Interior Environment of Box

Said sealed box has means to allow flow of oxygen and/or air into the box (Figure 1, E) without allowing germs inside the box to leave the box. Said sealed box has means for the egress of the used air (Figure 1, F) to come out of the box without allowing live germs to enter the outer environment of the box. Means are provided to sterilize egress air by heat before the air is allowed to enter the outer environment.

Said box has means to maintain a slight negative air pressure in respect to the box's interior environment to reduce any chance of germ inside the box escaping into the outer environment. Should a leak in said box occur or at any time, the air pressure inside said box loses its negative pressure in respect to its pressure relative to air pressure outside said box, an alarm can be made to sound.

Said box has associated means for regulating interior humidity by means obvious to those skilled in the art.

### Privacy

Said box is mostly transparent to facilitate patient care, but where patient is not fully gowned, means are provided to provide privacy at least to the genital area and to the breast area for female patients. Such means may be simply be a curved cover held away from direct contact with the patient. There is now light changing window glass that could be used to make areas of the box less transparent.

In the case of the embodiment depicted in Figure 3, said containment device can have an interior curtain that can be pulled by the patient to provide complete privacy, although magnetic means can be provided on the curtains that would allow said curtains to be opened from the outside of said containment device.

### Heat

Said box has means to regulate the inside temperature of said box by such means as a heated bed surface and/or by using heated air pumped into said box.

### Decubitus (bedsore) Prevention

Said box has means to prevent bed sores by the use of standard anti-decubitus air mattresses or other similar provisions.

### Physical Therapy Option

In a preferred embodiment, said box has inside a manually operated exercise bar which uses resistance to exercise the patient's major limbs. Also, as described above under "Sealed Box," where the bed used inside said box is electrically powered to enable said patient to stand, said patient can receive physical therapy in standing position. Figure 6 depicts said bed in various positions.

### Lighting

In a preferred embodiment said box can have its own light source for patient's benefit (for example, to read a book) or caregiver's benefit although it may be preferable to provide light from outside said box.

### Caregiving Features

### General

Said box like depicted in Figure 1 can be placed on a mechanized flat surface that can tilt the head or foot of the box or the left or the right side of the box and such mechanism can be a part of the underside of said box. Said box has means to restrain or support the patient during this process so they do not slide off the mattress. Such tilting allows the patient to be showered and dirty water to be drained out (Figure 1, G) or to wash away from the patient any fecal matter or urine on the mattress.

Alternatively, said box of Figure 1 can be made of sufficient vertical dimension to allow an electric powered bed to be placed inside said box, which can even place a hypotensive patient into a Trendelenburg position, and which can tilt the patient and the bed into reverse Trendelenburg position to allow washing away of bodily waste material from said patient, said waste material then be collectible and removed from said box using, for example, vacuum suction means placed strategically in and around said box.

### Waste Management

Said sealed box has efficient means to disinfect liquid or solid waste of the patient and other used products coming out of said box, by chlorine or other disinfectant, by autoclaving, or by high heat.

In one preferred embodiment, said box has incinerator means (Figure 1, H) connected to said box so that soiled linen and other infected products of care-giving can be passed into said incinerator means without such product releasing germs outside said box. Such incinerator means shall have means to prevent noxious fumes from incineration from entering said box or the environment outside the box.

In another preferred embodiment, said box has a hole in the bed under the buttocks of the patient to drain away fecal material into a collection container which empties into such incineration means, all ensuring that no germs are allowed to escape out of the box into the outer environment.

Another preferred embodiment of said box has means to disinfect products of caregiving by allowing such products to be passed into a container outside the box that holds chlorine or other disinfectants in such a manner as to not allow live germs on the products to escape into the environment outside said box. Provisions are provided to prevent noxious fumes of disinfectant from getting into said box holding a patient.

Another embodiment comprises in case of room sized containment device like that depicted in Figure 3 and Figure 5, a floor water vacuuming means that can be provided which can be operated using any additional glove portal means provided onto walls closer to the floor level (e.g., 12 inches (∼30 cm) above the floor line) wherein what is vacuumed is directly placed into either disinfection means outside said containment box or incineration means. In this manner, any fecal material that may end up on the floor of said containment box can be washed away using shower means provided inside said containment box together with vacuum means just described.

To facilitate waste disposal, a large receptacle box can be provided inside said box or in space contiguous to said box (see below, adjacent Lounge Space Room, Figure 5, A) with a hermetically sealed lid to place items needing to be disposed of. Said receptacle box would have a large tubing (Figure 5, B) through which a powerful suction can suck out of said receptacle box disposal items placed in said receptacle box. Such suction technology borrows from age-old "tube transporter systems" in factories and is well-known. Those skilled in the art can make it work. Such waste products sucked out of said receptacle box can end up in an incineration means or other disinfecting means.

### Providing of Food & Supplies

Said box has means to allow equipment, supplies, and medication to be inserted into the box without any significant potential of infected air inside said box from escaping into the room that holds said box.

In a preferred embodiment of said box, samples of blood, urine and other bodily excretions can be removed from said box after tubes holding such samples are dipped first in a disinfectant and passed out through an airlock chamber portal means. Said portal means (Figure 1, I & Figure 3, J) uses an intermediary "airlock" chamber attached to said box (for example, 12 inches (∼30 cm) long, 8 inches (∼8 cm) high, and 12 inches (∼30 cm) deep) with an air-tight door from said chamber to said box interior and a second air-tight door from said chamber to the environment outside said box. It will be obvious to those skilled in the art how to decontaminate the interior of said chamber in-between each use, such as with disinfectant wash fluid or disinfectant gas. Food and other medical supplies can be placed into said chamber using the exterior door after which said exterior door is closed air-tight. Subsequently, an operator can reach into the interior of said box using one of the glove portal means to open the door separating said chamber from the interior of said box, grab any item placed into said chamber and place the item inside said box. The operator then closes securely the interior door to said chamber, after which said chamber is disinfected for the next use.

Said box has means to allow intravenous tubings connected to intravenous fluids hanging outside said box into said box through ports designed to not allow germs to come out of said box. Design of such port means is obvious to those skilled in the art, but can include such means as a rubber plug with a slit that allows an intravenous tubing to be passed into the interior of said box. Said box has similar means to allow respirator tubing connected to a respirator unit outside said box to enter said box through ports designed to not allow germs to come out of said box. It may be an operational provision to not permit any tubing that entered said box to not come back out of said box except through means described above under Waste Management. Similarly, said box can have means to allow a warm water hose to enter said box without allowing any germ inside the box to come outside, said hose then being usable to provide shower to the patient.

### Placement of Patient into Box

Means are provided for placing a patient into said box. In a preferred embodiment, the wall of said box nearest the head of patient to be placed into said box is hinged to open to allow a patient to be slid into said box, said hinged wall serving as a door being made to close air-tight and locking it shut ensuring no accidental opening that can allow germs from inside said box to escape into the environment. Other means for insertion of patient and things like furniture has also been discussed above under descriptions of the embodiment of Figure 3.

### Degree of Seal of Box or Containment Device

Different pathogenic germs have different characteristics for transmission. Some viruses that cause Severe Acute Respiratory Syndrome (SARS) such as SARS corona viruses are easily transmitted over the air, while other viruses like ebola viruses are less likely to transmit over the air unless an infected patient sneezes and propels infected droplets from his nose at another person. While it is obvious that the degree of air separation and sealing of patient compartment must be more complete in the case of SARS than in the case of ebola, it will be advantageous to ensure as complete a hermetic seal of the patients compartment as practical and economically possible. However, some degree of imperfection in the seal may not defeat the intent and performance of this invention when dealing with germs not considered air-transmissible and such imperfection may not be considered to have violated the scope of this invention. The intent of this invention is to enable separation between an infected patient and caregivers of the type that virtually eliminates transmission of the germs from the patient to the caregivers. Because devices such as this invention are made and stored in case of sudden occurrence of viral epidemics, since we would not know what type of virus may cause the problem, it will be advantageous to create and store units that have the highest standard for separation, which would be a hermetically sealed containment device.

### Provision to Provide Lounge Space Room to Patient held in Said Box

Some patients needing isolation from caregivers and the society are not so sick as to require full-time bed rest and even those who are very sick and require bed rest will get well and would desire more space in which to recuperate while still infectious. In one embodiment, such as depicted in figure 3, the sealed space delineated box converts readily between one for recumbent patient care and one that allows additional space for lounging and walking. In another embodiment depicted in Figure 5 and 6, there is provided for said box described for figure 1 an adjacent sealed space delimited room, means for egress and ingress to and from said box to said space delimited room without allowing escape of germs from interior of said box and of said room to external environment of said box and room, for the purpose of allowing a patient being treated in said box to occasionally stretch out and relax in said room between treatments. In a preferred embodiment, said box of Figure 1 (with vertical dimension tall enough) employs an electrically powered bed that assists said patient to come to a sitting position from a recumbent one and come to a standing position.

The lateral longitudinal walls of said room can have multiple glove port means at approximately 42 to 44 inches (∼107 to ∼112 cm)(center) high from the floor on each side of the length of said room so that caregivers on both sides of said room can physically support a patient as he ambulates. Said glove port means must then be placed close enough to each other to allow transfer of patient's arm on each side from one caregiver to the next down said length of said room. One way to determine the spacing between glove port means is to use the forearm length as a measure since one caregiver will transfer the arm of said patient to the next caregiver's gloved hand from the next gloved portal down said length of said room and so the distance between said gloved port means cannot exceed twice the length of a typical caregiver's forearm. Although forearm length depends on the height of a caregiver, one would prudently use, for this purpose, larger, strong caregivers to support said patient on his both sides. Therefore, a distance of two feet (∼61 cm) center to center of said gloved port means would provide a minimal distance between said glove port means. Since a patient can fall during ambulation, additional glove port means closer to the floor and placed with inter-glove spacing about the same as those at 42 to 44 inches (∼107 to ∼112 cm) in height should be sufficient. In a preferred embodiment, said gloves are bidirectional to allow either right or left hand to be inserted comfortably.

One can provide a wheeled flat bed means tucked under a bed used for treatment that can be wheeled out into the lounge area onto which a fallen patient can be placed, said flat bed means having the capability to raise patient all the way up to the level of his treatment bed.

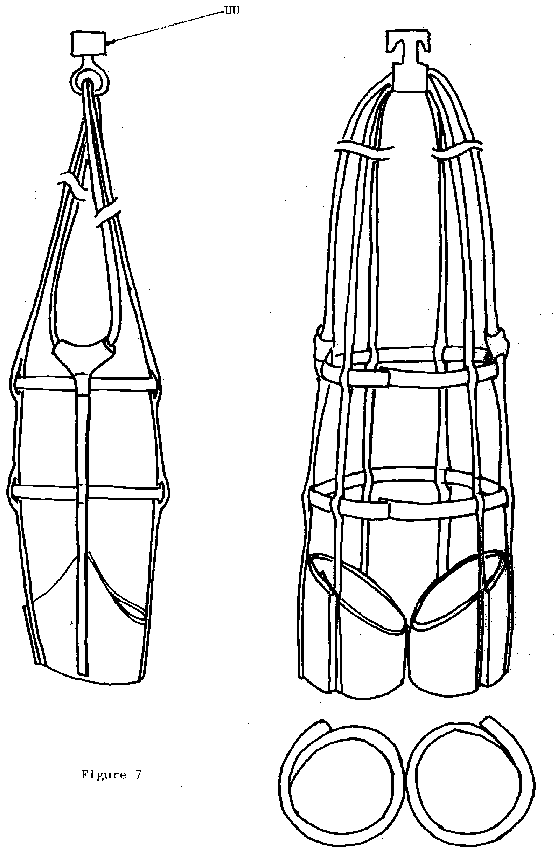

As a precaution against a patient falling in said lounge room, said patient can be made to wear a body harness that is linked to a rail running along a reinforced overhead spine that runs along the length of said lounge room. The rail is preferably made of a strong metal and is supported firmly in its overhead position by such means as metal framing like shown in Figure 5. Such a rail can be separate from the framing to which it is attached (not shown so in Figure 5). In a preferred embodiment, either such rail system or the hook from the body harness that is attached to said rail is capable of enabling said patient to easily reverse the direction of ambulation upon reaching the end of said room opposite to the treatment box. Said body harness can be made from strong linen. One example of such a harness that can be placed easily on a patient is shown in Figure 7.

The floor of said lounge room can be subject to heavy use from ambulation. In a preferred embodiment, the floor of said lounge room can be reinforced with a vinyl like runner carpet that could be 50 mil (∼1.3 mm) thick. Such said runner carpet can be replaced from time to time, always making sure it is disposed through means provided in this invention that prevents germs from inside to escape into the environment outside said box and lounge room.

### Other Provisions

Other provisions which would be obvious to those skilled in the art may be provided in and around said box to provide better care and comfort to a patient being treated inside said box. Many embellishments and additional embodiments may be added to described invention without falling outside the scope of described invention.

## Claims

1. A device comprising:
a mostly transparent hermetically sealed box large enough to hold an infected human for purpose of medically treating the human long-term without contaminating caregivers or the environment outside said box,
said box enabling caregivers to see said infected human being cared for,
said box having means for placing said human sealed inside and removing said human from said box,
said box having multiple dual-gloved portal means on walls of said box for handling and caring of said human from outside said box,
said box having means for inputting respiratory gases into said box,
said box having means for maintaining optimum humidity inside said box,
said box having means for placing and removing objects into and out of said box without allowing germs inside said box to escape outside said box,
said box having means for providing fluids and nourishment to said human,
said box having means for evacuation to outside of said box of waste products from said human and waste products of caregiving without contaminating said caregivers or said environment outside said box, and
said box having means to regulate temperature within said box,
all said means ensured to not allow germs inside said box to escape outside said box,
**characterized in that** said box has means for allowing egress of expired gases from said vessel and sterilizing said expired gases by heat before releasing into outside environment while keeping pressure inside said box less than the environment outside said box.

2. A device as claimed in claim 1 wherein said dual-gloved portal means include
one set of dual-gloved portal means in the box at the end wall close to the head of the patient that would allow the patient to be intubated or to receive nasal suction or to allow insertion of nasogastric tubes,
a second set of dual-gloved portal means on the side walls near the patient's right and left elbows that would allow venipuncture of patient for tests and would allow venous catheterization so that said patient can be given intravenous fluids, medications and nourishment,
a third set of dual-gloved portal means on the right and left side walls at the hip level that would allow caregivers to tap the femoral artery for blood gases, do a lumbar puncture, or catheterize the bladder of the patient,
a fourth additional dual-gloved portal means at the level of the patient's ankle that would allow venipuncture as well allow starting intravenous catheters there.

3. A device as claimed in claim 1 wherein said evacuation of waste products of said patient and waste product of caregiving to said patient is by placing said waste products into an incinerator that is readily accessible from said box.

4. A device as claimed in claim 1 wherein said evacuation of waste products of said patient and waste product of caregiving to said patient is by placing said waste products into a disinfectant solution that is readily accessible from said box.

5. A device as claimed in claim 1 wherein said box opens into an adjacent sealed space delimited lounge room without allowing escape of germs from interior of said box and of said room to external environment of said box and room, for the purpose of allowing a patient being treated in said box to occasionally stretch out and relax in said room when not under treatment in said treatment box.

6. A device as claimed in claim 5, said lounge room also having walls with multiple gloved portal means that can be used by caregivers to assist said patient to ambulate or to sit.

7. A device as claimed in claim 5 said lounge room having a strongly supported rail in the ceiling of said room in its longitudinal direction to which a human supporting harness can be linked to prevent said patient from falling down when ambulating in said room.

8. A device as claimed in claim 1 wherein an electrically powered patient bed is provided that can enable said patient to sit or receive power assist to come to a standing position or be placed into Trendelenburg position.

9. A device as claimed in claim 1 wherein means are provided to inside of said box to enable said patient to receive a warm shower.

10. A device as claimed in claim 1 wherein vacuum means are provided to said box to enable cleaning interior of said box.

11. A device as claimed in claim 1, in which said box is large enough to hold a hospital bed and large enough for said infected human to ambulate next to said bed;
said box is capable of down-sizing to surround said bed to enable gloved-portal means on both sides of said bed to be proximate said bed; and
said box is capable of enlarging back to its larger dimensions without allowing germs inside said box to escape into the environment outside said box.

12. A device as claimed in claim 1, in which privacy means are provided to provide privacy at least to the genital area and to the breast area for female patients.

13. A method of removing and disinfecting waste products of infected human and waste products of caregiving from a germ-containment box or room holding an infected patient wherein means are provided to place said waste product into a sealed chamber having air-tight door to said box or room interior, wherein said chamber is connected to an incineration means by ductal means, wherein means are provided using powerful air current between said chamber, said ductal means, and said incinerator to cause said waste products to move from said chamber into said incinerator means.

14. A method as claimed in claim 13, in which said box or room has means for allowing a flow of oxygen and/or air into the box without allowing germs inside the box to leave the box and means for allowing egress of expired gases and sterilizing said expired gases by heat before releasing them into outside environment while keeping pressure inside said box or room less than the environment outside said box or room.

15. A method as claimed in claim 13 or 14, in which the germ-containment box is a device as claimed in claim 1.

## Patentansprüche

1. Vorrichtung, umfassend:
eine weitestgehend transparente, hermetisch verschlossene Box, die groß genug ist zur Aufnahme eines infizierten Menschen zum Zweck einer medizinischen Langzeitbehandlung des Menschen ohne Kontamination von Pflegepersonal oder der Umgebung außerhalb der Box, wobei
die Box dem Pflegepersonal ermöglicht, den infizierten Menschen, der betreut wird, zu sehen,
die Box Mittel zum verschlossenen Platzieren des Menschen im Inneren sowie zum Entfernen des Menschen aus der Box aufweist,
die Box, an den Wänden der Box, mehrere Doppelhandschuh-Zugangsmittel zur Behandlung und Betreuung des Menschen von außerhalb der Box aufweist,
die Box Mittel zur Einleitung von Atemgasen in die Box aufweist,
die Box Mittel zur Aufrechterhaltung einer optimalen Feuchtigkeit im Inneren der Box aufweist,
die Box Mittel zum Platzieren und Entfernen von Objekten in und aus der Box, ohne dass Keime ins Innere der Box eindringen oder aus der Box entweichen können, aufweist,
die Box Mittel zum Bereitstellen von Flüssigkeiten und Nahrung für den Menschen aufweist,
die Box Mittel zum Abtransportieren von Abfallerzeugnissen von dem Menschen und von Abfallprodukten der Pflege aus der Box nach außen, ohne dass die Pflegekräfte oder die Umgebung außerhalb der Box kontaminiert werden, aufweist, und
die Box Mittel zum Regeln der Temperatur innerhalb der Box aufweist,
alle der Mittel sicherstellen, dass Keime im Inneren der Box nicht aus der Box nach außen entweichen können,
**dadurch gekennzeichnet, dass** die Box Mittel zum Ermöglichen eines Ablassens von ausgeatmeten Gase aus dem Behälter und Sterilisieren der ausgeatmeten Gase durch Hitze, bevor sie in die Außenumgebung entlassen werden, aufweist, wobei der Druck im Inneren der Box gleichzeitig geringer gehalten wird als in der Umgebung außerhalb der Box.

2. Vorrichtung nach Anspruch 1, wobei die Doppelhandschuh-Zugangsmittel Folgendes beinhalten
einen Satz von Doppelhandschuh-Zugangsmitteln in der Box an der Stirnwand in der Nähe des Kopfes des Patienten, der eine Intubierung oder eine Nasenabsaugung des Patienten ermöglichen würde oder ein Einführen von nasogastralen Sonden ermöglichen würde,
einen zweiten Satz von Doppelhandschuh-Zugangsmitteln an den Seitenwänden in der Nähe des rechten und linken Ellenbogens des Patienten, der eine Venenpunktion des Patienten für Tests ermöglichen würde und eine venöse Katheterisierung, sodass dem Patienten intravenös Flüssigkeiten, Medikamente und Nahrung bereitgestellt werden kann,
einen dritten Satz von Doppelhandschuh-Zugangsmitteln an der rechten und linken Seitenwand in Hüfthöhe, der es dem Pflegepersonal ermöglichen würde, die Femoralarterie nach Blutgasen abzutasten, eine Lumbalpunktion durchzuführen oder die Blase des Patienten zu katheterisieren,
vierte zusätzliche Doppelhandschuh-Zugangsmittel auf Knöchelhöhe des Patienten, die eine Venenpunktion sowie das Beginnen intravenöser Katheter an dieser Stelle ermöglichen würden.

3. Vorrichtung nach Anspruch 1, wobei das Abtransportieren von Abfallerzeugnissen des Patienten und Abfallprodukten aus der Pflege des Patienten erfolgt, indem die Abfallprodukte in eine Verbrennungseinrichtung gegeben werden, die aus der Box heraus leicht zugänglich ist.

4. Vorrichtung nach Anspruch 1, wobei das Abtransportieren von Abfallerzeugnissen des Patienten und Abfallprodukten aus der Pflege des Patienten erfolgt, indem die Abfallprodukte in eine Desinfektionslösung gegeben werden, die aus der Box heraus leicht zugänglich ist.

5. Vorrichtung nach Anspruch 1, wobei sich die Box in einen angrenzenden, verschlossenen, räumlich begrenzten Aufenthaltsraum öffnet, ohne ein Ausdringen von Keimen aus dem Inneren der Box und aus dem Raum in die äußere Umgebung der Box und des Raums zuzulassen, um es einem in der Box behandelten Patienten zu ermöglichen, sich gelegentlich auszustrecken und in dem Raum zu entspannen, wenn er in der Behandlungsbox nicht behandelt wird.

6. Vorrichtung nach Anspruch 5, wobei der Aufenthaltsraum ebenfalls Wände mit mehreren Handschuh-Zugangsmitteln aufweist, die von Pflegekräften verwendet werden können, um dem Patienten beim Gehen oder Sitzen zu helfen.

7. Vorrichtung nach Anspruch 5, wobei der Aufenthaltsraum eine stark gestützte Schiene in der Decke des Raums in seiner Längsrichtung aufweist, an der ein Stützgeschirr für Menschen angebracht werden kann, um ein Hinfallen des Patienten beim Gehen in dem Raum zu verhindern.

8. Vorrichtung nach Anspruch 1, wobei ein elektrisch angetriebenes Patientenbett bereitgestellt ist, das dem Patienten ermöglichen kann, zu sitzen oder eine Kraftunterstützung zu erhalten, um in eine stehende Position zu kommen oder in die Trendelenburg-Position gebracht zu werden.

9. Vorrichtung nach Anspruch 1, wobei Mittel im Inneren der Box bereitgestellt sind, um es dem Patienten zu ermöglichen, eine warme Dusche zu erhalten.

10. Vorrichtung nach Anspruch 1, wobei Vakuummittel für die Box bereitgestellt sind, um ein Reinigen der Box zu ermöglichen.

11. Vorrichtung nach Anspruch 1, wobei die Box groß genug ist, um ein Krankenhausbett aufzunehmen, und groß genug ist, dass der infizierte Mensch neben dem Bett gehen kann;
wobei die Box in der Lage ist, sich zu verkleinern, um das Bett zu umgeben, damit sich die Handschuh-Zugangsmittel auf beiden Seiten des Bettes in der Nähe des Bettes befinden; und
wobei die Box in der Lage ist, sich zurück auf ihre größeren Abmessungen zu vergrößern, ohne dass Keime im Inneren der Box in die Umgebung außerhalb der Box entweichen können.

12. Vorrichtung nach Anspruch 1, wobei Mittel zum Schutz der Privatsphäre bereitgestellt sind, um zumindest einen Schutz der Privatsphäre im Genitalbereich und im Brustbereich für weibliche Patienten bereitzustellen.

13. Verfahren zum Entfernen und Desinfizieren von Abfallerzeugnissen eines infizierten Menschen und von Abfallprodukten aus der Pflege aus einer Keimeindämmungsbox oder einem -raum, in dem sich ein infizierter Patient befindet, wobei Mittel bereitgestellt sind, um das Abfallprodukt in einer verschlossenen Kammer zu platzieren, die eine luftdichte Tür zum Inneren der Box oder des Raumes aufweist, wobei die Kammer durch eine Kanaleinrichtung mit einer Verbrennungseinrichtung verbunden ist, wobei Mittel unter Verwendung eines starken Luftstroms zwischen der Kammer, den Kanaleinrichtungen und der Verbrennungseinrichtung vorgesehen sind, um zu bewirken, dass sich die Abfallprodukte von der Kammer in die Verbrennungseinrichtung bewegen.

14. Verfahren nach Anspruch 13, wobei die Box oder der Raum Mittel, die einen Sauerstoff- und/oder Luftstrom in die Box zulassen, ohne zuzulassen, dass Keime im Inneren der Box aus der Box entweichen können, und Mittel, die ein Ablassen exspirierter Gase und ein Sterilisieren der exspirierten Gase durch Hitze ermöglichen, bevor diese an die Umgebung außerhalb abgegeben werden, aufweist, wobei der Druck im Inneren der Box oder des Raumes gleichzeitig geringer gehalten wird als in der Umgebung außerhalb der Box oder des Raumes.

15. Verfahren nach Anspruch 13 oder 14, wobei die Keimeindämmungsbox eine Vorrichtung nach Anspruch 1 ist.

## Revendications

1. Dispositif comprenant :
un caisson principalement scellée hermétiquement transparente suffisamment grande pour tenir un humain infecté dans le but de traiter médicalement à long terme l'humain sans contaminer les soignants ou l'environnement en dehors dudit caisson,
ledit caisson permettant aux soignants de voir que l'humain infecté est soigné,
ledit caisson ayant des moyens pour placer ledit humain enfermé à l'intérieur et de retirer ledit humain dudit caisson,
ledit caisson ayant plusieurs moyens de portique à double gants sur les parois dudit caisson pour la manipulation et les soins dudit humain depuis l'extérieur dudit caisson,
ledit caisson ayant des moyens pour introduire des gaz respiratoires dans ledit caisson,
ledit caisson ayant des moyens pour maintenir une humidité optimale dans ledit caisson,
ledit caisson ayant des moyens pour placer et pour retirer des objets dans et hors dudit caisson sans permettre aux germes à l'intérieur dudit caisson de s'échapper dudit caisson,
ledit caisson ayant des moyens pour fournir des liquides et de la nourriture audit humain,
ledit caisson ayant des moyens d'évacuation à l'extérieur dudit caisson de déchets provenant dudit humain et de déchets d'un soignant sans contaminer lesdits soignants ou ledit environnement en dehors dudit caisson, et
ledit caisson ayant des moyens pour réguler la température dans ladite
caisson,
l'ensemble desdits moyens ont permis de s'assurer de ne pas laisser les germes à l'intérieur dudit caisson pour s'échapper à l'extérieur dudit caisson,
**caractérisé en ce que** ledit caisson a des moyens pour permettre la sortie des gaz expirés dudit récipient et pour stériliser lesdits gaz expirés par la chaleur avant de se libérer dans l'environnement extérieur tout en gardant la pression dans ledit caisson inférieure à l'environnement en dehors dudit caisson.

2. Dispositif selon la revendication 1, dans lequel lesdits moyens de portique à double gants incluent
un ensemble de moyens de portique à double gants dans le caisson au niveau de la paroi d'extrémité situés à proximité de la tête du patient qui permettrait au patient d'être intubé ou de recevoir une aspiration nasale ou qui permettrait l'insertion des tubes nasogastriques,
un deuxième ensemble de moyens de portique à double gants sur les parois latérales près des coudes droit et gauche du patient qui permettrait la ponction veineuse du patient pour effectuer des tests et qui permettrait le cathétérisme veineux afin que ledit patient puisse recevoir des liquides intraveineux, des médicaments et une alimentation,
un troisième ensemble de moyens de portique à double gants sur les parois latérales droite et gauche au niveau de la hanche qui permettrait aux soignants d'appuyer sur l'artère fémorale pour les gaz sanguins, de pratiquer une ponction lombaire ou de cathétériser la vessie du patient,
un quatrième ensemble de moyens supplémentaires de portique à double gants au niveau de la cheville du patient qui permettrait à la ponction veineuse d'y démarrer également les cathéters intraveineux.

3. Dispositif selon la revendication 1, dans lequel ladite évacuation, des déchets provenant dudit patient et des déchets provenant des soins audit patient, se réalise en plaçant lesdits déchets dans un incinérateur qui est facilement accessible à partir dudit caisson.

4. Dispositif selon la revendication 1, dans lequel ladite évacuation des déchets provenant dudit patient et des déchets provenant des soins audit patient, se réalise en plaçant lesdits déchets dans une solution désinfectante qui est facilement accessible à partir dudit caisson.

5. Dispositif selon la revendication 1, dans lequel ledit caisson s'ouvre dans un espace adjacent fermé délimité par une salle, sans permettre l'évacuation des germes de l'intérieur dudit caisson et de ladite salle vers l'environnement extérieur dudit caisson et de ladite salle, dans le but d'autoriser au patient traité dans ledit caisson de s'étirer de manière occasionnelle et de se détendre dans ladite salle lorsqu'il n'est pas traité dans ledit caisson de traitement.

6. Dispositif selon la revendication 5, ladite salle ayant également des parois avec plusieurs moyens de portique à double gants, ce qui peut être utilisé par les soignants pour aider ledit patient à déambuler ou à s'asseoir.

7. Dispositif selon la revendication 5, ladite salle ayant un rail fortement soutenu au plafond de ladite salle dans sa direction longitudinale vers laquelle un harnais de soutien pour l'humain peut être lié pour empêcher ledit patient de tomber lorsqu'il déambule dans ladite pièce.

8. Dispositif selon la revendication 1, dans lequel un lit de patient électriquement alimenté est fourni, ce qui peut permettre audit patient de s'asseoir ou de recevoir une assistance électrique pour se mettre en position debout ou être placé en position de Trendelenburg.

9. Dispositif selon la revendication 1, dans lequel les moyens sont fournis à l'intérieur dudit caisson pour permettre audit patient de recevoir une douche chaude.

10. Dispositif selon la revendication 1, dans lequel les moyens d'aspiration sont fournis audit caisson pour permettre le nettoyage de l'intérieur dudit caisson.

11. Dispositif selon la revendication 1, dans lequel ledit caisson est suffisamment grand pour contenir un lit d'hôpital et suffisamment grand pour que ledit humain infecté puisse se déplacer à côté dudit lit ;
ledit caisson peut être rapetissé pour entourer ledit lit afin de permettre auxdits moyens de portique à double gants sur les deux côtés dudit lit d'être proches dudit lit ; et
ledit caisson peut retourner à ses dimensions plus grandes sans permettre aux germes de l'intérieur dudit caisson de s'échapper dans l'environnement en dehors dudit caisson.

12. Dispositif selon la revendication 1, dans lequel les moyens de protection de la vie privée sont fournis pour assurer la confidentialité au moins sur la région génitale et sur la région mammaire pour les patientes.

13. Procédé de retrait et de désinfection des déchets de l'humain infecté et des déchets des soins provenant du caisson ou de la salle de confinement des germes détenant un patient infecté, dans lequel les moyens sont fournis pour placer ledit déchet dans une salle scellée qui a une porte étanche à l'air dudit caisson ou de l'intérieur de ladite salle, dans lequel ladite salle est reliée à des moyens d'incinération grâce à des moyens canalaires, dans lequel les moyens sont fournis à l'aide d'un courant d'air puissant entre ladite salle, lesdits moyens canalaires, et ledit incinérateur pour amener lesdits déchets à se déplacer de ladite salle dans ledit incinérateur.

14. Procédé selon la revendication 13, dans lequel ledit caisson ou ladite salle a des moyens pour permettre un flux d'oxygène et/ou d'air dans le caisson sans permettre aux germes à l'intérieur du caisson de sortir du caisson et les moyens pour permettre l'évacuation des gaz expirés et pour stériliser lesdits gaz expirés par la chaleur avant de les libérer dans l'environnement extérieur tout en gardant la pression dans ledit caisson ou ladite salle inférieure à l'environnement en dehors dudit caisson ou de ladite pièce.

15. Procédé selon la revendication 13 ou 14, dans lequel le caisson de confinement de germes est un dispositif selon la revendication 1.
